(19) Europäisches Patentamt
European Patent Office
Office européen des brevets

(11) **EP 2 813 419 A1**

(12) **EUROPEAN PATENT APPLICATION**

(43) Date of publication:
**17.12.2014 Bulletin 2014/51**

(51) Int Cl.:
***B62J 99/00*** *(2009.01)*  ***G01L 3/00*** *(2006.01)*
***G06K 9/00*** *(2006.01)*

(21) Application number: **14171539.1**

(22) Date of filing: **06.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.06.2013 TW 102120977**

(71) Applicant: **J.D Components Co., Ltd.**
**Shou Shui Hsiang, Chang Hua Hsien (TW)**

(72) Inventors:
• **Lee, Yuan-Kuei**
**438 Taichung City (TW)**
• **Hsu, Shih-Wei**
**300 Hsinchu City (TW)**

(74) Representative: **Straus, Alexander**
**Patentanwälte**
**Becker, Kurig, Straus**
**Bavariastrasse 7**
**80336 München (DE)**

(54) **Method of estimating bicycle pedaling torque according to bicycle pedaling velocity**

(57) A method of estimating a bicycle pedaling torque according to a bicycle pedaling velocity is provided. The pedaling torque is the torque exerted on a crank of the bicycle being pedaled. The method includes: sensing a pedaling velocity of a crank of a bicycle with a velocity sensor (11) for a predetermined number of instances during a predetermined time interval ($t_{pd}$); calculating the pedaling velocity ideal waveform $V_0$ and the pedaling velocity actual waveform area $V_1$; calculating the difference $\Delta V_i$ of $V_0$-$V_1$; calculating a correction c according to re- lationship between the pedaling velocity and the torque; and performing computation by Equation 1: $\Delta M_i/M_0 = \Delta V_i/V_0 + c$, to obtain relative variation $\Delta M_i/M_0$ of the pe- daling torque, where $M_0$ denotes the torque required for producing $V_0$, whereas $M_1$ denotes the torque required for producing $V_1$, and $M_0$ is obtained by an actual exper- iment, wherein a difference $M_0 - M_1$ is denoted with $\Delta M_i$; said $M_1$ is calculated by said Equation 1 to be an esti- mated bicycle pedaling torque.

FIG. 1

**Description**

**BACKGROUND OF THE INVENTION**

1. Technical Field

The present invention relates to bicycles, and more particularly, to a method of estimating a bicycle pedaling torque according to a bicycle pedaling velocity.

2. Description of Related Art

Conventional power assisted bicycles generate an auxiliary power which is not only enjoyable but also spares riders the labor of pedaling, thereby resulting in their growing popularity among riders.

Conventional power assisted bicycles measure riders' pedaling force before generating the auxiliary power as needed; otherwise, the conventional power assisted bicycles are either idling because of generating an overly high auxiliary power or are not giving perceivable assistance to riders because of generating an overly low auxiliary power. In the aforesaid two undesired situations, the auxiliary power is generated in vain. The conventional technique of detecting a pedaling force (or torque) requires a torque sensor mounted on an electric bicycle to sense the pedaling force or torque exerted by a rider who is pedaling the electric bicycle. However, the torque sensor is intricate and expensive. Accordingly, it is imperative to provide a technique of sensing a pedaling torque by any means other than a torque sensor and thus cutting electric bicycle production costs.

TW 201202090 A1, which is entitled Method and Device of Estimating Torque of Bicycle Crank Actuator and the German corresponding application of which is DE 10 2010 028 656.7, discloses a method of estimating a torque by evaluating an angular velocity-time relationship to identify at least a signal property of the angular velocity and then correlating the torque with the at least a signal property in accordance with the predetermined dependency of the torque on the at least a signal property. The method of TW 201202090 A1 infers a pedaling force by waveform variations and involves plenty of factors which cannot be resolved and quantified. For instance, the signal property is identified by two mechanisms: (1) power of alternating component of angular velocity, and (2) deviation of signal shape of alternating component of angular velocity from a sine curve. The marked difference in technical contents and numerical values between mechanism (1) and mechanism (2) proves that mechanism (1) and mechanism (2) differ greatly from each other in the torque finally estimated, and thus it is understandable that the torque finally estimated is flawed with large errors and inaccuracy.

Moreover, TW 201202090 A1 is based on the principle that the variation of the pedaling velocity correlates with the variation of the pedaling torque, and thus TW 201202090 A1 proposes estimating the pedaling torque by the pedaling velocity. However, TW 201202090 A1 has a drawback, that is, although the correlation of the pedaling velocity and the variation of the pedaling torque is calculated, not only is the calculation stricken with large errors, but the calculation is also intricate because of necessity to calculate at least a signal property of angular velocity and correlate the torque with the at least a signal property in accordance with the dependency of the torque on the at least a signal property, not to mention that the estimation of the pedaling torque requires a high-speed computation unit, thereby adding to the costs of performing the estimation process.

**SUMMARY OF THE INVENTION**

Convention torque estimation methods not only yield large errors but are also complicated. In view of this, the present invention provides a method of estimating a bicycle pedaling torque according to a bicycle pedaling velocity, wherein the pedaling torque is the torque exerted on a crank of the bicycle being pedaled. The method of the present invention comprises the steps of: sensing a pedaling velocity of a crank of a bicycle with a velocity sensor for a predetermined number of instances during a predetermined time interval to thereby calculate frequency data and amplitude data pertaining to the pedaling velocity, compiling the frequency data and amplitude data to create a pedaling velocity actual waveform, and defining a pedaling velocity ideal waveform according to the frequency data and amplitude data; calculating the pedaling velocity ideal waveform area and denoting the calculated pedaling velocity ideal waveform area with $V_0$, calculating the pedaling velocity actual waveform area and denoting the calculated pedaling velocity actual waveform area with $V_1$, calculating the difference $V_0-V_1$ and denoting the calculated difference with $\Delta V_i$, and calculating a relative variation $\Delta V_i/V_0$ of the pedaling velocity; calculating a correction c according to a relationship between the pedaling velocity and the torque; performing computation by Equation 1: $\Delta M_i/M_0 = \Delta V_i/V_0 + c$; and adding the relative variation $\Delta V_i/V_0$ of the pedaling velocity and the correction c to get the relative variation $\Delta M_i/M_0$ of the pedaling torque, wherein $M_0$ denotes the torque required for producing $V_0$, whereas $M_1$ denotes the torque required for producing $V_1$, and $M_0$ is obtained by an actual experiment, wherein a difference $M_0 - M_1$ is denoted with $\Delta M_i$; said $M_1$ is calculated by

said Equation 1 to be an estimated bicycle pedaling torque.

Therefore, the present invention has advantages as follows: estimating a pedaling torque by a pedaling velocity, simplifying the estimation process, and reducing the errors of the estimation process.

**BRIEF DESCRIPTION OF THE DRAWINGS**

FIG. 1 is a schematic view of data sensed by a velocity sensor according to the first preferred embodiment of the present invention;

FIG. 2 is a waveform schematic view of a pedaling velocity actual waveform according to the first preferred embodiment of the present invention;

FIG. 3(A) is a waveform schematic view of inferring a pedaling velocity ideal waveform from a pedaling velocity actual waveform according to the first preferred embodiment of the present invention;

FIG. 3(B) is another waveform schematic view of inferring another pedaling velocity ideal waveform from the pedaling velocity actual waveform according to the first preferred embodiment of the present invention;

FIG. 4 is an integral schematic view of integral computation performed on a pedaling velocity actual waveform according to the first preferred embodiment of the present invention;

FIG. 5 is another integral schematic view of integral computation performed on a pedaling velocity ideal waveform according to the first preferred embodiment of the present invention;

FIG. 6 is yet another schematic view of a state of the overlapping of a pedaling velocity actual waveform and a pedaling velocity ideal waveform after undergoing integral computation according to the first preferred embodiment of the present invention;

FIG. 7 is a block diagram of constituent elements of a bicycle according to the first preferred embodiment of the present invention; and

FIG. 8 is another block diagram of constituent elements of an experimental bicycle according to the first preferred embodiment of the present invention.

**DETAILED DESCRIPTION OF THE EMBODIMENT OF THE INVENTION**

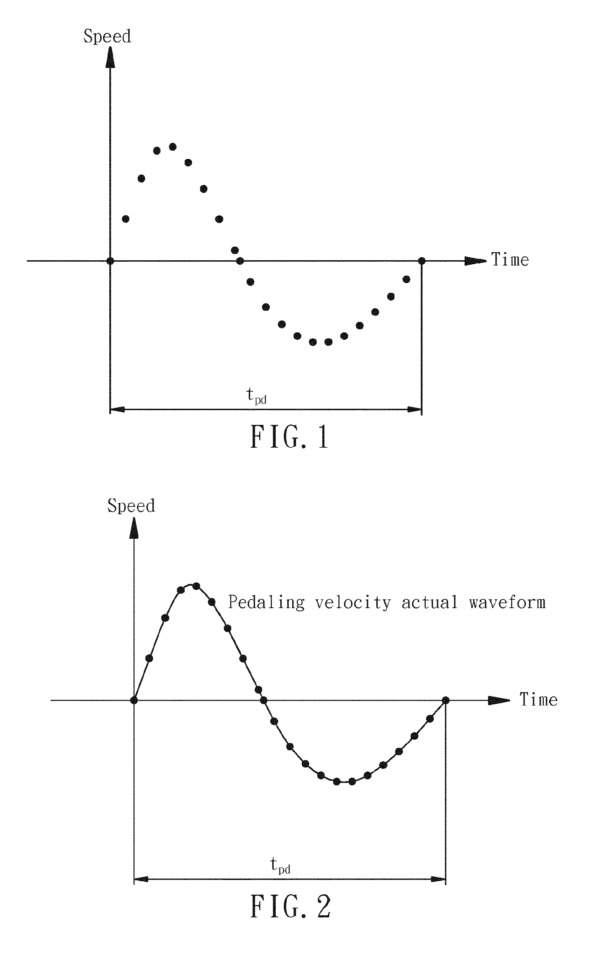

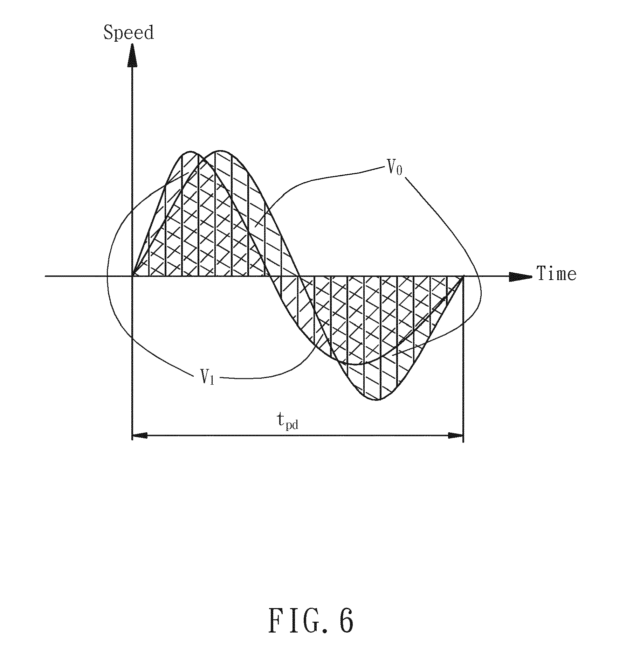

Referring to FIG. 1 through FIG. 7, there are shown diagrams of a method of estimating a bicycle pedaling torque according to a bicycle pedaling velocity according to the first preferred embodiment of the present invention, wherein the pedaling torque is the torque exerted on a crank of the bicycle being pedaled. The method of the present invention comprises the steps described below.

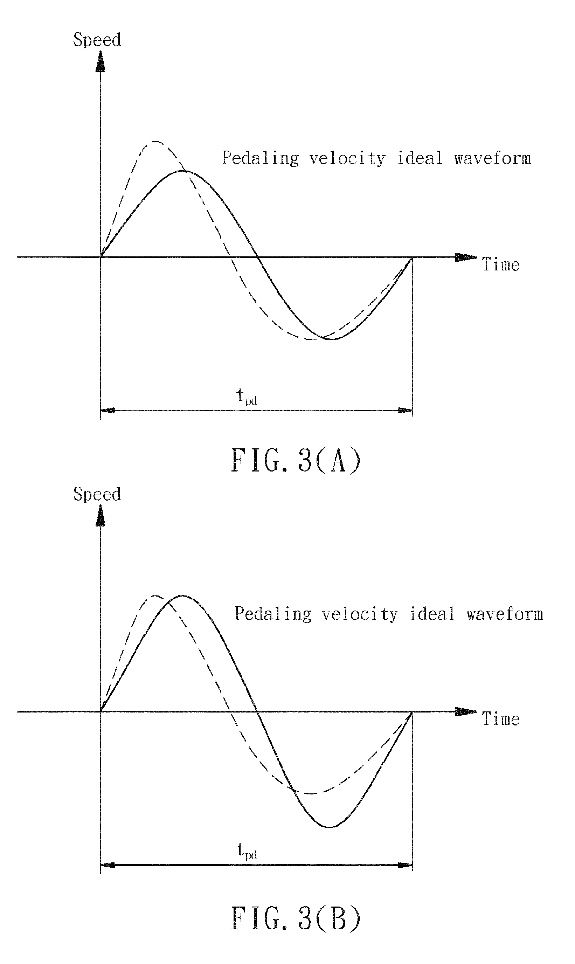

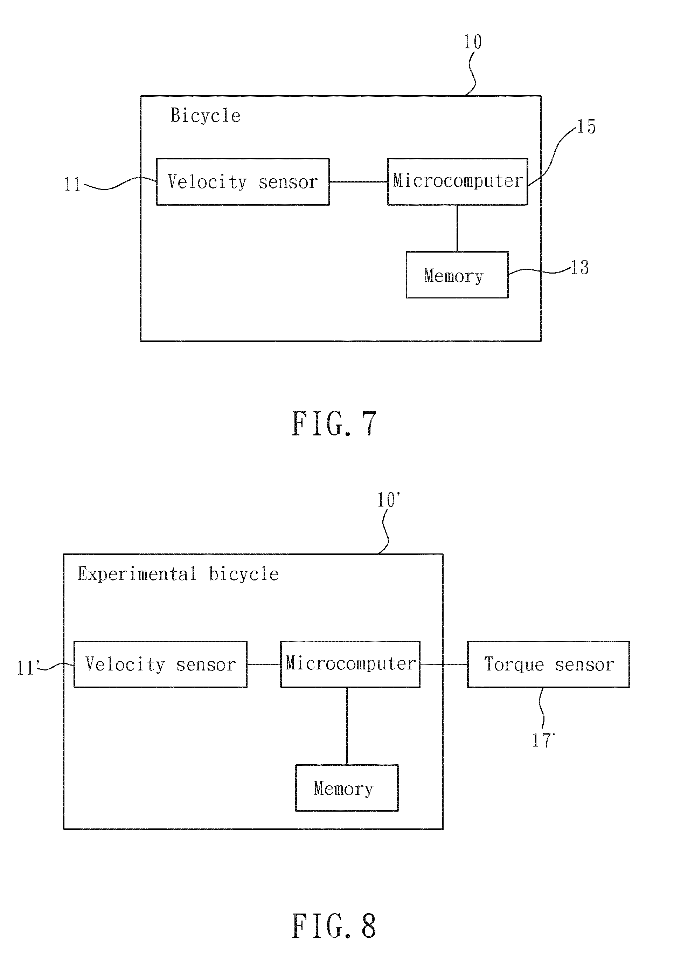

Referring to FIG. 1, the pedaling velocity of a crank (not shown) of a bicycle 10 is sensed with a velocity sensor 11 for a predetermined number of instances (for example, 20 instances as shown in the diagram) during a predetermined time interval $t_{pd}$ to thereby calculate the frequency data and amplitude data pertaining to the pedaling velocity. Then, the aforesaid data are compiled to create a pedaling velocity actual waveform shown in FIG. 2. Afterward, a pedaling velocity ideal waveform is defined according to the aforesaid data as shown in FIG. 3(A) and FIG. 3(B). Referring to FIG. 3(A), a comparison of the pedaling velocity actual waveform indicated by the dashed line and the pedaling velocity ideal waveform indicated by the solid line reveals that the pedaling velocity actual waveform has larger amplitude and shorter period than the pedaling velocity ideal waveform in the first half-cycle and has the same amplitude as but longer period than the pedaling velocity ideal waveform in the second half-cycle amplitude, thereby indicating that the amplitude of the pedaling velocity ideal waveform is estimated according to the pedaling velocity actual waveform in the second half-cycle. Referring to FIG. 3(B), a comparison of the pedaling velocity actual waveform indicated by the dashed line and the pedaling velocity ideal waveform indicated by the solid line reveals that the pedaling velocity actual waveform has the same amplitude as but shorter period than the pedaling velocity ideal waveform in the first half-cycle and has smaller amplitude but longer period than the pedaling velocity ideal waveform in the second half-cycle, thereby indicating that the amplitude of the pedaling velocity ideal waveform is estimated according to the pedaling velocity actual waveform in the first half-cycle. In this embodiment, the pedaling velocity ideal waveform is illustrated with FIG. 3(A). As mentioned before, the amplitude of the pedaling velocity ideal waveform is estimated according to the amplitude of the pedaling velocity actual waveform in a specific period. In fact, the amplitude of the pedaling velocity ideal waveform can also be the average of first half-cycle amplitude and second half-cycle amplitude or can be defined by a user. In practice, the frequency data and amplitude data pertaining to the pedaling velocity are stored in a memory 13 as well as computed and processed by a microcomputer 15. The velocity sensor 11 is mounted on the bicycle 10 and illustrated with FIG. 7.

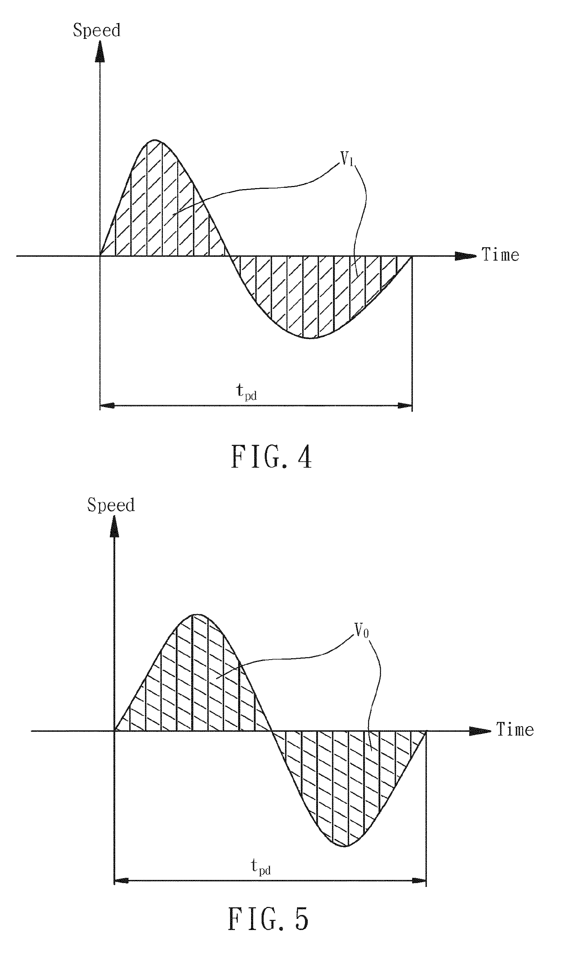

Referring to FIGs. 4, 5, with integral computation, the method of the present invention entails calculating the pedaling velocity ideal waveform area $V_0$, calculating the pedaling velocity actual waveform area $V_1$, calculating the difference $V_0$-$V_1$ to denote the difference with $\Delta V_i$, and calculating the relative variation $\Delta V_i/V_0$ of the pedaling velocity.

The correction c is calculated according to the relationship between the pedaling velocity and the torque.

Computation is performed by Equation 1 as follow:

$$\Delta M_i/M_0 = \Delta V_i/V_0 + c \ldots\ldots\ldots\ldots\ldots\ldots\ldots\ldots\ldots\ldots \text{(Equation 1)}$$

Add the relative variation $\Delta V_i/V_0$ of the pedaling velocity and the correction c to get the relative variation $\Delta M_i/M_0$ of the pedaling torque; $M_0$ denotes the torque required for producing $V_0$, whereas $M_1$ denotes the torque required for producing $V_1$, and $M_0$ is obtained by an actual experiment, wherein a difference $M_0 - M_1$ is denoted with $\Delta M_i$; said $M_1$ is calculated by said Equation 1 to be an estimated bicycle pedaling torque. The actual pedaling torque $M_1$ is calculated, using the relative variation $\Delta M_i/M_0$ of the pedaling torque. The correction c is calculated, by conducting an actual pedaling experiment to obtain the relative variation $\Delta V_i/V_0$ of the pedaling velocity and the relative variation $\Delta M_i/M_0$ of the pedaling torque, and then calculate the difference of the relative variation $\Delta V_i/V_0$ of the pedaling velocity and the relative variation $\Delta M_i/M_0$ of the pedaling torque to get the correction c. The actual pedaling experiment is conducted on an experimental bicycle 10'. The experimental bicycle 10' is equipped with a velocity sensor 11' for sensing the pedaling velocity and connected to a torque sensor 17' for sensing the pedaling torque. The experimental bicycle 10' is illustrated with FIG. 8. In practice, after being calculated, the correction c is further defined according to a corresponding numerical value obtained by the actual pedaling experiment. If the difference between pedaling velocities obtained by the actual pedaling experiment is small (for example, when their errors are less than $\pm 100\%$), the correction c will be set to their average, and thus the correction c will be a constant. If the difference between pedaling velocities obtained by the actual pedaling experiment is large, (for example, when their errors are larger than 100%), the pedaling velocities will be recorded to create a conversion table for defining the correction c, such that a user looks up the conversion table for the correction c when performing computation with Equation 1. The conversion table is disclosed by the related prior art and thus is not illustrated with a diagram herein for the sake of brevity.

In the above process flow of the method of the present invention, the relative variation $\Delta V_i/V_0$ of the pedaling velocity is calculated by dividing the difference $\Delta V_i$ of $V_0$-$V_1$ by the pedaling velocity ideal waveform area $V_0$, and thus the relative variatian $\Delta V_i/V_0$ of the pedaling velocity does not carry any unit; hence, not only is the relative variation $\Delta V_i/V_0$ of the pedaling velocity calculated without giving considerations to a unit, but the relative variation $\Delta M_i/V_0$ of the pedaling torque is also calculated with Equation 1 according to the correction c and the relative variation $\Delta V_i/V_0$ of the pedaling velocity. Similarly, the relative variation $\Delta M_i/M_0$ of the pedaling torque does not carry any unit; hence, it is calculated in the absence of any unit and thus in a simple manner. With the correction c being obtained as a result of sensing the experimental bicycle 10' by the velocity sensor 11' and as a result of sensing the experimental bicycle 10' by the torque sensor 17', the correction c evaluates the actual pedaling condition precisely and thus manifests a high degree of accuracy to thereby enhance the accuracy and reduce the error of the actual pedaling torque $M_1$.

Therefore, the bicycle in the first embodiment of the present invention dispenses with a torque sensor but requires a velocity sensor for sensing the pedaling velocity during cycling, and then the pedaling velocity thus sensed is processed and applied to a computation process for estimating the actual pedaling torque $M_1$ more accurately than the prior art does.

In conclusion, in the first embodiment of the present invention, the actual pedaling torque $M_1$ is estimated according to the pedaling velocity, the estimation process is simplified and yields a relative small error.

A method of estimating a bicycle pedaling torque according to a bicycle pedaling velocity according to the second preferred embodiment of the present invention is generally similar to the method of the first preferred embodiment of the present invention, except that the method in the second preferred embodiment has the technical features described hereunder.

Equation 1 is further corrected to become Equation 2 below.

$$\Delta M_i/M_0 = t(\Delta V_i/V_0) + c \ldots\ldots\ldots\ldots\ldots\ldots\ldots\ldots\ldots \text{(Equation 2)}$$

wherein t denotes a multiple correction between $\Delta M_i/M_0$ and $\Delta V_i/V_0$ after deducting the correction c.

Moreover, the multiple correction t is obtained by conducting an actual pedaling experiment to obtain the relative variation $\Delta V_i/V_0$ of the pedaling velocity and the relative variation $\Delta M_i/M_0$ of the pedaling torque and obtain the correction c and the multiple correction t in accordance with a linear relation of the experiment. Moreover, like the first embodiment, the second embodiment involves conducting an actual pedaling experiment on an experimental bicycle 10' equipped with the velocity sensor 11' for sensing the pedaling velocity and equipped with the torque sensor 17' for sensing the pedaling torque.

Therefore, the second embodiment provides Equation 2 which is more precise than Equation 1, such that actual pedaling torque $M_1$ calculated by Equation 2 is of higher accuracy than one calculated by Equation 1.

The other technical features and achievable advantages of the second embodiment are identical to that of the first embodiment and thus are not described herein for the sake of brevity.

In conclusion, the present invention is advantageously characterized in that: the integral of a waveform is calculated, and non-linear low noise is removed from the waveform during the integral computation process because of the averaging effect of integral computation. Therefore, the method of the present invention is capable of eliminating noise.

**Claims**

1. A method of estimating a bicycle pedaling torque according to a bicycle pedaling velocity, the pedaling torque being exerted on a crank of a bicycle, being **characterized in that** the method comprises steps of:

   sensing a pedaling velocity of a crank of a bicycle (10) with a velocity sensor (11) for a predetermined number of instances during a predetermined time interval ($t_{pd}$) to thereby calculate frequency data and amplitude data pertaining to the pedaling velocity, compiling the frequency data and amplitude data to create a pedaling velocity actual waveform, and defining a pedaling velocity ideal waveform according to the frequency data and amplitude data;
   calculating the pedaling velocity ideal waveform area and denoting the calculated pedaling velocity ideal waveform area with $V_0$, calculating the pedaling velocity actual waveform area and denoting the calculated pedaling velocity actual waveform area with $V_1$, calculating the difference $V_0$-$V_1$ and denoting the calculated difference with $\Delta V_i$, and calculating a relative variation $\Delta V_i/V_0$ of the pedaling velocity;
   calculating a correction c according to a relationship between the pedaling velocity and the torque;
   performing computation by Equation 1 below:

   $$\Delta M_i/M_0 = \Delta V_i/V_0 + c;$$

   and
   adding the relative variation $\Delta V_i/V_0$ of the pedaling velocity and the correction c to get the relative variation $\Delta M_i/M_0$ of the pedaling torque, wherein $M_0$ denotes the torque required for producing $V_0$, whereas $M_1$ denotes the torque required for producing $V_1$, and $M_0$ is obtained by an actual experiment, wherein a difference $M_0 - M_1$ is denoted with $\Delta M_i$; said $M_1$ is calculated by said Equation 1 to be an estimated bicycle pedaling torque.

2. The method of estimating a bicycle pedaling torque according to a bicycle pedaling velocity as recited in claim 1, wherein the correction c is obtained by conducting an actual pedaling experiment to obtain the relative variation $\Delta V_i/V_0$ of the pedaling velocity and the relative variation $\Delta M_i/M_0$ of the pedaling torque and then calculating a difference of the relative variation $\Delta V_i/V_0$ of the pedaling velocity and the relative variation $\Delta M_i/M_0$ of the pedaling torque to get the correction c.

3. The method of estimating a bicycle pedaling torque according to a bicycle pedaling velocity as recited in claim 2, wherein the actual pedaling experiment is conducted on an experimental bicycle (10') equipped with a velocity sensor (11') for sensing the pedaling velocity and equipped with a torque sensor (17') for sensing the pedaling torque.

4. The method of estimating a bicycle pedaling torque according to a bicycle pedaling velocity as recited in claim 1, wherein the pedaling velocity ideal waveform area and the pedaling velocity actual waveform area are obtained by performing integral computation on the waveform.

5. The method of estimating a bicycle pedaling torque according to a bicycle pedaling velocity as recited in claim 1, wherein Equation 1 is further corrected to become Equation 2 expressed by $\Delta M_i/M_0 = t(\Delta V_i/V_0) + c$, where t denotes a multiple correction between $\Delta M_i/M_0$ and $\Delta V_i/V_0$ after deducting the correction c.

6. The method of estimating a bicycle pedaling torque according to a bicycle pedaling velocity as recited in claim 5, wherein the multiple correction t is obtained by conducting an actual pedaling experiment to obtain the relative

variation $\Delta V_i/V_0$ of the pedaling velocity and the relative variation $\Delta M_i/M_0$ of the pedaling torque and obtain the correction c and the multiple correction t in accordance with a linear relation of the experiment.

7.  The method of estimating a bicycle pedaling torque according to a bicycle pedaling velocity as recited in claim 6, wherein the actual pedaling experiment is conducted on an experimental bicycle (10') equipped with a velocity sensor (11') for sensing the pedaling velocity and equipped with a torque sensor (17') for sensing the pedaling torque.

8.  The method of estimating a bicycle pedaling torque according to a bicycle pedaling velocity as recited in claim 1, wherein frequency data and amplitude data pertaining to the pedaling velocity are stored in a memory (13), whereas frequency data and amplitude data pertaining to the actual pedaling torque are stored in the memory (13), wherein the frequency data and amplitude data are computed and processed with a microcomputer (15).

9.  The method of estimating a bicycle pedaling torque according to a bicycle pedaling velocity as recited in claim 1, wherein the correction c is a constant or is defined by a conversion table.

FIG. 1

Pedaling velocity actual waveform

FIG. 2

FIG. 3(A)

FIG. 3(B)

FIG. 4

FIG. 5

FIG. 6

FIG. 7

FIG. 8

Europäisches
Patentamt

European
Patent Office

Office européen
des brevets

**EUROPEAN SEARCH REPORT**

Application Number

EP 14 17 1539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | DE 10 2010 028656 A1 (BOSCH GMBH ROBERT [DE]) 10 November 2011 (2011-11-10) * claims; figures * | 1 | INV. B62J99/00 G01L3/00 G06K9/00 |
| A | JP 2004 025913 A (MATSUSHITA ELECTRIC IND CO LTD) 29 January 2004 (2004-01-29) * abstract; figures * | 1 | |
| A | DE 10 2009 000919 A1 (BOSCH GMBH ROBERT [DE]) 19 August 2010 (2010-08-19) * paragraph [0039] * | 1 | |

|  |
|---|
| TECHNICAL FIELDS SEARCHED (IPC) |
| B62J G01L G06K B62K B62M |

The present search report has been drawn up for all claims

| Place of search | Date of completion of the search | Examiner |
|---|---|---|
| The Hague | 31 October 2014 | Grunfeld, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                     EP 14 17 1539

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2014

| Patent document cited in search report | Publication date | Patent family member(s) | Publication date |
|---|---|---|---|
| DE 102010028656 A1 | 10-11-2011 | CN 102869564 A<br>DE 102010028656 A1<br>EP 2566748 A1<br>TW 201202090 A<br>WO 2011138166 A1 | 09-01-2013<br>10-11-2011<br>13-03-2013<br>16-01-2012<br>10-11-2011 |
| JP 2004025913 A | 29-01-2004 | JP 4024091 B2<br>JP 2004025913 A | 19-12-2007<br>29-01-2004 |
| DE 102009000919 A1 | 19-08-2010 | DE 102009000919 A1<br>WO 2010094515 A1 | 19-08-2010<br>26-08-2010 |

EPO FORM P0459

For more details about this annex : see Official Journal of the European Patent Office, No. 12/82

**REFERENCES CITED IN THE DESCRIPTION**

**Patent documents cited in the description**

- TW 201202090 A1

- DE 102010028656